# EUROPEAN PATENT APPLICATION

(11) **EP 4 239 542 A1**
(43) Date of publication of application: **06.09.2023**
(21) Application number: 21886043.5
(22) Date of filing: 21.10.2021
(51) Int. Cl.: G06Q 10/06, G06Q 50/04

(54) **ASSISTANCE SYSTEM, ASSISTANCE METHOD, AND STORAGE MEDIUM**

(30) Priority: 29.10.2020 JP 2020181380
(71) Applicant: NEC Platforms, Ltd., Kanagawa 213-8511 (JP); NEC Corporation, 108-8001 Tokyo (JP)
(72) Inventor: WATANABE, Mitsuyasu, Kawasaki-shi, Kanagawa 213-8511 (JP); CHISHAKI, Hayato, Tokyo 108-8001 (JP)
(74) Representative: Betten & Resch
(86) International application number: PCT/JP2021/038888
(87) International publication number: WO 2022/091924

(57) **Abstract**

Provided is an assistance system or the like which can enhance accuracy of operation stop determination in an operation process. This assistance system 1 comprises: a detection unit 120 which detects a hand from an image obtained by imaging an operation area; a determination unit 130 which determines an operation state on the basis of the detection result for the hand; and an output unit 140 which outputs information indicating the operation state.

## Description

### Technical Field

The present disclosure relates to a technology for assistance in determining a work state.

### Background Art

Manufacturing industries such as factories have begun to use Internet of things (IoT). For example, there is an increasing number of situations in which moving images are taken with cameras or the like and the captured moving images are analyzed to manage the traceability of things. In recent years, in factories and the like, a video management system (VMS) has been increasingly used for analysis using such images. There is a trend toward a smart factory throughout the entire factory by installing cameras in the factory and analyzing image data in various forms using artificial intelligence (AI), machine learning, or the like.

In addition, it is required to specify a process causing a delay among work processes performed in a factory or the like.

However, an occurrence of a work stop is notified to a line manager in the factory mainly by a report from work and an alarm from a system utilizing an IoT device. Therefore, it is not easy for the line manager in the factory to grasp the work stop by a means other than the report and the alarm.
PTL 1 describes a display method including specifying processing periods and standby periods of a plurality of devices included in a manufacturing line based on log information about processing performed by the plurality of devices, and displaying information indicating a process where a lot of standby time is spent.
PTL 2 describes a work assistance device that estimates a bottleneck work based on a difference between an actual work time value and a target work time value.

### Citation List

### Patent Literature

PTL 1: JP 2015-075795 A
PTL 2: JP 2019-023803 A

### Summary of Invention

### Technical Problem

The technology according to PTL 1 cannot be applied to work performed by a human, because the log information output by the device performing work is used. In the technology according to PTL 2, it is not possible to determine whether there is a standby time. In addition, in the technology according to PTL 2, an accurate result cannot be obtained if the target value is not accurately set.

An object of the present disclosure is to provide an assistance system or the like capable of improving accuracy in determining a stop of work in a work process.

### Solution to Problem

An assistance system according to an aspect of the present disclosure includes: detection means for detecting a hand from an image obtained by imaging a work area; determination means for determining a work state based on a hand detection result; and output means for outputting information indicating the work state.

An assistance method according to an aspect of the present disclosure includes: detecting a hand from an image obtained by imaging a work area; determining a work state based on a hand detection result; and outputting information indicating the work state.

A program according to an aspect of the present disclosure causes a computer to execute: detection processing of detecting a hand from an image obtained by imaging a work area; determination processing of determining a work state based on a hand detection result; and output processing of outputting information indicating the work state. An aspect of the present disclosure can also be implemented by a storage medium that stores the above-described program.

### Advantageous Effects of Invention

The present disclosure has an effect in that accuracy can be improved in determining a stop of work in a work process.

### Brief Description of Drawings

[Fig. 1] Fig. 1 is a block diagram illustrating an example of a configuration of an assistance system according to a first example embodiment of the present disclosure.
[Fig. 2] Fig. 2 is a diagram illustrating an example of information indicating a work state according to the first example embodiment of the present disclosure.
[Fig. 3A] Fig. 3A is a flowchart illustrating an example of an operation of an assistance device according to the first example embodiment of the present disclosure.
[Fig. 3B] Fig. 3B is a flowchart illustrating an example of an operation of an assistance device according to the first example embodiment of the present disclosure.
[Fig. 4] Fig. 4 is a flowchart illustrating an example of an operation of displaying an image in a designated time period of the assistance device according to the first example embodiment of the present disclosure.
[Fig. 5] Fig. 5 is a block diagram illustrating an example of a configuration of an assistance system according to a second example embodiment of the present disclosure.
[Fig. 6] Fig. 6 is a flowchart illustrating an example of an operation of the assistance system according to the second example embodiment of the present disclosure.
[Fig. 7] Fig. 7 is a diagram illustrating an example of a hardware configuration of a computer capable of implementing an assistance device and an assistance system according to an example embodiment of the present disclosure.
[Fig. 8] Fig. 8 is a block diagram illustrating a configuration of an assistance system A according to a sixth modification of the first example embodiment of the present disclosure.
[Fig. 9] Fig. 9 is a block diagram illustrating an example of a configuration of an assistance system according to a seventh modification of the first example embodiment of the present disclosure.

### Example Embodiment

Hereinafter, example embodiments of the present disclosure will be described in detail with reference to the drawings.

### <First Example Embodiment>

First, a first example embodiment of the present disclosure will be described.

### <Configuration>

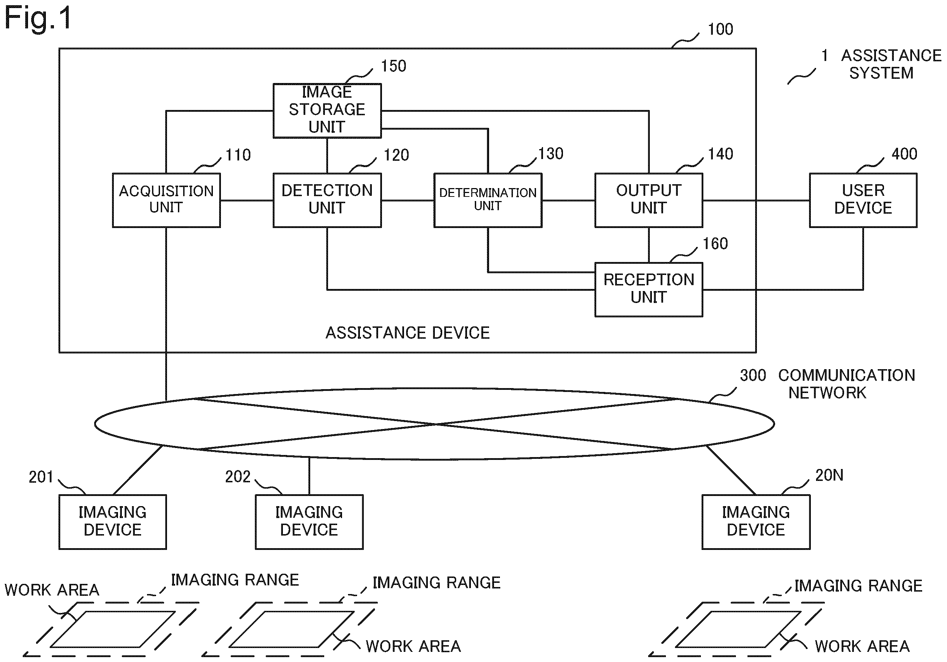

Fig. 1 is a block diagram illustrating an example of a configuration of an assistance system 1 according to a first example embodiment of the present disclosure.

### <Assistance System 1>

In the example illustrated in Fig. 1, the assistance system 1 includes an assistance device 100, a plurality of imaging devices, that is, an imaging device 201, an imaging device 202,..., and an imaging device 20N, and a user device 400.

The assistance device 100 is communicably connected to each of the imaging device 201, the imaging device 202,..., and the imaging device 20N via a communication network 300. The assistance device 100 is further communicably connected to the user device 400. Hereinafter, in the description in which the imaging device 201, the imaging device 202,..., and the imaging device 20N are not distinguished from one another, the imaging device 201, the imaging device 202,..., and the imaging device 20N will be simply referred to as imaging devices.

### <Outline>

First, an outline of the assistance system 1 will be described. The assistance device 100 detects hand regions in work areas of a plurality of images captured by the imaging devices, and determines a work state based on a hand region detection result. In the present example embodiment, the plurality of imaging devices are configured to image respective places where works are performed in a plurality of different processes. The work area is designated, for example, by a user of the user device 400 to include an area of a place where work is performed. The assistance device 100 outputs information indicating the determined work state to the user device 400. The user device 400 receives the output information and displays the received information. The user device 400 transmits information on a time period based on the designation made by the user to the assistance device 100. The assistance device 100 transmits images captured in that time period to the user device 400. The user device 400 receives the images captured in the time period of interest from the assistance device 100 and displays the received images. Hereinafter, the devices included in the assistance system 1 will be described in more detail.

### <Imaging Device>

Each of the imaging device 201, the imaging device 202,..., and the imaging device 20N captures an image of a place where a factory worker performs work, for example, on a work table.

A range in which the imaging device captures an image will be referred to as an imaging range. The imaging device transmits the image captured in the imaging range to the assistance device 100. The imaging device may transmit the image together with information indicating a time at which the image was captured to the assistance device 100. The image refers to, for example, a plurality of still images.

The image may be, for example, a moving image. In the following description, the image will be referred to as a plurality of images.

In the present example embodiment, each of the imaging devices is configured so that a range in which it is considered that a hand may exist during work in one of the different processes is included in the imaging range. In addition, the assistance device 100 holds information on the order of processes in which the imaging devices image respective work ranges. In other words, each component of the assistance device 100, which will be described later, is configured to refer to the information on the order of processes in which the imaging devices image respective work ranges.

### <Assistance Device 100>

The assistance device 100 includes an acquisition unit 110, a detection unit 120, a determination unit 130, an output unit 140, an image storage unit 150, and a reception unit 160.

### <Acquisition Unit 110>

The acquisition unit 110 acquires, from the imaging devices, a plurality of images and information indicating a time at which each of the plurality of images was captured. The acquisition unit 110 associates an image with an identifier of an imaging device that captured the image and information indicating an imaging time that is a time at which the image was captured. The information indicating the imaging time is information for specifying a date and time when the image was captured.

The acquisition unit 110 sends the plurality of acquired images to the detection unit 120. Specifically, for example, the acquisition unit 110 sends, to the detection unit 120, a plurality of images each associated with an identifier of an imaging device and information indicating an imaging time.

### <Detection Unit 120>

First, the detection unit 120 receives information specifying a work area for each of the imaging devices from the reception unit 160, which will be described in detail later. The detection unit 120 sets, as the work area, the area specified by the received information specifying the work area for each of the imaging devices. The work area refers to a range in which hand detection is to be performed in an image captured in an imaging range. The work area is set by the user of the user device 400. The work area is designated, for example, by the user of the user device 400. The information specifying the work area is transmitted from the user device 400 to the detection unit 120 via the reception unit 160. The detection unit 120 may be configured to, when not receiving information specifying a work area for an imaging device, set the work area for the imaging device to a predetermined area.

The detection unit 120 receives a plurality of images from the acquisition unit 110. The detection unit 120 detects a hand region from each of the plurality of received images. Specifically, the detection unit 120 detects a hand region in a work range of each of the plurality of received images.

The detection unit 120 detects a hand region, for example, using a discriminator that determines whether the hand region is included in the image. For example, the detector is a detector trained in advance by machine learning. The detection unit 120 may detect a hand region using another method such as a method of detecting a hand region based on a skin color or a glove color. The hand region is a region including an image of a hand. The hand region includes a gloved hand region. The hand region may include an arm region.

The detection unit 120 sends information indicating a hand detection result to the determination unit 130. The information indicating the hand detection result is, for example, a combination of information indicating whether a hand region has been detected from the work area of the image, a time at which the image was captured, and information specifying an imaging device that captured the image.

The detection unit 120 loads an image, a work area set in the image, and a hand detection result from the work area of the image into the image storage unit 150 for each image. As described above, an image is associated with an identifier of an imaging device that captured the image and an imaging time at which the image was captured. Specifically, the detection unit 120 loads an image, an identifier of an imaging device that captured the image, an imaging time at which the image was captured, information indicating a work area in which a hand has been detected, and a hand detection result into the image storage unit 150.

### <Determination Unit 130>

The determination unit 130 receives the information indicating the hand detection result from detection unit 120. The determination unit 130 determines a work state based on the hand detection result, in other words, based on the information indicating the hand detection result. Specifically, the determination unit 130 determines a time period in which no work is performed for each imaging device as a work state, based on information indicating whether a hand region has been detected from the work area of the image, a time at which the image was captured, and information specifying an imaging device that captured the image. Note that the determination unit 130 may be configured to read information indicating a hand detection result from the image storage unit 150 instead of receiving the information from the detection unit 120. In that case, the detection unit 120 does not need to send the information indicating the hand detection result to the determination unit 130.

In addition, the determination unit 130 is configured to determine a time period in which no work is performed as a work state for each imaging device, when notified from the reception unit 160, which will be described in detail later, that a request for work state information has been received from the user device 400.

For example, the determination unit 130 detects a time period in which no hand is detected from the images (hereinafter also referred to as non-detection time period) as a time period in which no work is performed (hereinafter referred to as non-work time period).

The time period in which no hand is detected from the images is, for example, a time period from when no hand is detected until immediately before a next hand is detected, with respect to the plurality of images captured in time-series order. In other words, the time period in which no hand is detected from the images is, for example, a time period from a time of capturing an image where no hand is detected immediately after an image where a hand is detected to a time of capturing an image where no hand is detected immediately before a next image where a hand is detected, with respect to the plurality of images captured in time-series order. For example, the determination unit 130 may detect a non-detection time period having a length equal to or larger than a predetermined length as a time period in which no work is performed (that is, a non-work time period).

For example, the determination unit 130 may calculate, as a work state, a length ratio of a time period in which no hand is detected to each time period having a predetermined length for each imaging device (hereinafter referred to as a non-detection ratio). For example, the determination unit 130 may calculate, as a work state, a length ratio of a time period in which a hand is detected (hereinafter referred to as a detection time period) to each time period having a predetermined length for each imaging device (hereinafter referred to as a detection ratio). In this case, the determination unit 130 may set a time period in which the detection ratio is 1 (that is, a time period in which the non-detection ratio is zero) as a non-work time period.

The determination unit 130 sends information indicating a work state for each imaging device to the output unit 140.

### <Output Unit 140>

First, the output unit 140 may output an image captured in an imaging range by each of the imaging devices to the user device 400. In that case, for example, the output unit 140 may read an image acquired by the acquisition unit 110 from each of the imaging devices and loaded into the image storage unit 150 from the image storage unit 150, and send the read image to the user device 400. For example, the output unit 140 may receive an image acquired by the acquisition unit 110 from each of the imaging devices from the acquisition unit 110, and send the received image to the user device 400. Note that, in Fig. 1, a line connecting the acquisition unit 110 and the output unit 140 to each other in this case is omitted to prevent complication of the drawing. The user device 400 displays the received image. For example, the user of the user device 400 designates the above-described work area in the displayed image. The user device 400 transmits information indicating the designated work area to the reception unit 160, which will be described later.

In addition, the output unit 140 receives information indicating the work state for each imaging device from the determination unit 130. The output unit 140 outputs the information indicating the work state for each imaging device to the user device 400.

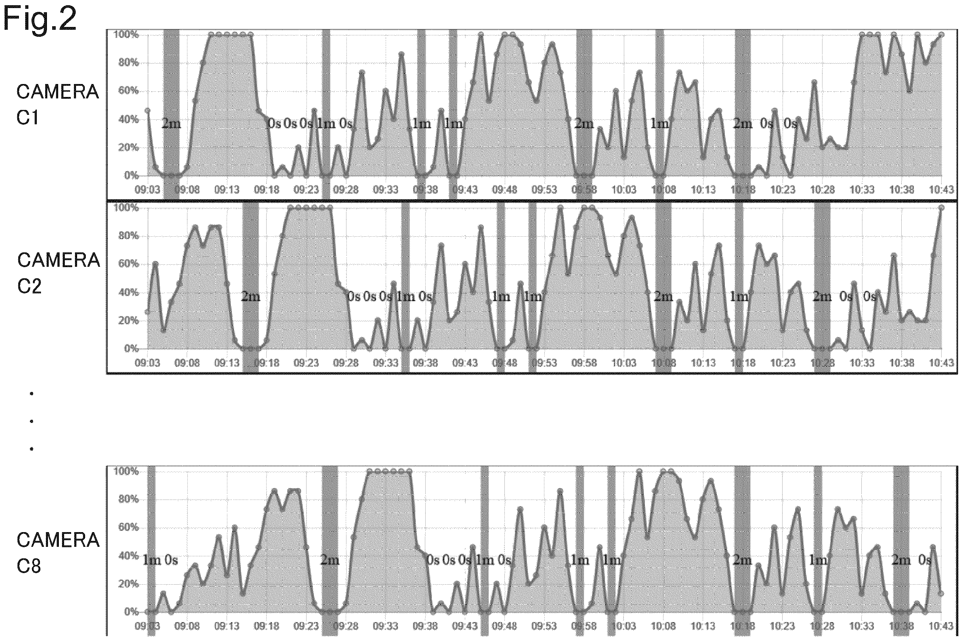

For example, the output unit 140 outputs information indicating a non-work time period to the user device 400 as information indicating a work state for each imaging device. For example, the output unit 140 may output, as information indicating a non-work time period, a figure in which a non-work time period and a work time period that is a time period other than the non-work time period, among time periods in which imaging is performed, are drawn in different colors. The information indicating the work state is not limited to this example. The output unit 140 outputs, for example, information as illustrated in Fig. 2 as information indicating a work state.

Fig. 2 is a diagram illustrating an example of information indicating a work state. The example illustrated in Fig. 2 is a line graph indicating a change in length ratio of a detection time period to each time period having a predetermined length, in which a time period in which the detection ratio is zero and a time period in which the detection ratio is not zero are displayed in different colors. In this example, graphs indicating work states of a plurality of processes are displayed in the order in which the processes are performed during a series of works. Furthermore, in the example illustrated in Fig. 2, information specifying imaging devices (e.g., camera C1, camera C2,..., and camera C8) that have captured respective work areas of the plurality of processes is also displayed.

The output unit 140 further receives information indicating a time period of interest from the reception unit 160, which will be described in detail later. The time period of interest indicates a time period set based on designation by the user. The output unit 140 reads an image captured by each imaging device in the time period of interest from the image storage unit 150, and outputs the read image to the user device 400.

In a case where the output unit 140 receives information designating an imaging device in addition to the information indicating the time period of interest from the reception unit 160, an image captured in the time period of interest by the imaging device specified by the information designating the imaging device is read from the image storage unit 150. Then, the output unit 140 outputs the read image to the user device 400.

### <Image Storage Unit 150>

The image storage unit 150 stores an image, an imaging time at which the image was captured, a work area set in the image, and a hand detection result for each imaging device loaded by the detection unit 120. Specifically, for example, the image storage unit 150 may store, for each imaging device, a combination of an identifier of the imaging device, an image captured by the imaging device, an imaging time at which the image was captured, information on a work area set in the image, and information indicating a result of detecting a hand in the work area of the image.

The image storage unit 150 may store an image captured by each of the imaging devices and uploaded by the acquisition unit 110.

### <Reception Unit 160>

The reception unit 160 receives information specifying a work area for each imaging device from the user device 400. The reception unit 160 sends the received information specifying the work area for each imaging device to the detection unit 120.

The reception unit 160 may receive a request for work state information from the user device 400.

Upon receiving a request for work state information from the user device 400, the reception unit 160 notifies the determination unit 130 that the request for work state information has been received from the user device 400.

In addition, the reception unit 160 receives designation of a time period from the user device 400. The designation of the time period is, for example, information for specifying one time period among the above-described time periods each having a predetermined length. The reception unit 160 sets a time period determined based on the received designation of the time period as a time period of interest. The reception unit 160 sends information indicating the time period of interest to the output unit 140.

The designation of the time period may be performed by a combination of a start time of the time period and an end time of the time period. The designation of the time period may be, for example, designation of a time. In a case where the designation of the time period is designation of a time, the reception unit 160 may determine a time period having a predetermined length including the time specified by the designation of the time according to a predetermined method. In this case, for example, the reception unit 160 may determine a time period having a predetermined length in which the time specified by the designation of the time is at the center. For example, the reception unit 160 may determine a time period having a predetermined length starting from the time specified by the designation of the time. For example, the reception unit 160 may determine a time period having a predetermined length ending at the time specified by the designation of the time. In these cases, the reception unit 160 sets the determined time period as a time period of interest.

The reception unit 160 may receive designation of an imaging device in addition to the designation of the time period from the user device 400. The designation of the imaging device indicates information specifying the imaging device. For example, the reception unit 160 sets a time period of interest based on the designation of the time period as described above, and sends the designation of the imaging device and the information indicating the time period of interest to the output unit 140.

### <User Device 400>

The user device 400 is, for example, a device including a display unit and an input unit such as a computer.

The user device 400 receives an image captured by each of the imaging devices from the output unit 140 of the assistance device 100, and displays the received image. For example, the user designates a work area in the displayed image. For example, the user device 400 specifies a range of a work area represented by coordinates in the coordinate system of the image from the range of the work area set in the displayed image. The user device sends, to the reception unit 160 of the assistance device 100, information specifying the range of the work area represented by the coordinates in the coordinate system of the image.

In addition, the user device 400 receives information indicating a work state for each imaging device from the output unit 140 of the assistance device. The user device 400 displays the received information indicating the work state for each imaging device.

For example, the user may designate a time value (or an imaging device and a time period) on a screen displaying the information indicating the work state for each imaging device.

When the user designates the time period, the user device 400 sends designation of the time period, which is information indicating the time period designated by the user, to the reception unit 160 of the assistance device 100.

In a case where the user designates an imaging device and a time period, the user device 400 sends the designation of the imaging device, which is information designating the imaging device, and the designation of the time period to the reception unit 160 of the assistance device 100.

In a case where the user device 400 sends the designation of the time period to the reception unit 160 of the assistance device 100, the user device 400 receives an image captured in a time period of interest determined based on the designation of the time period from the output unit 140 of the assistance device 100, and displays the received image. In a case where the user device 400 sends the designation of the imaging device and the designation of the time period to the reception unit 160 of the assistance device 100, the user device 400 receives, from the output unit 140, an image captured by the imaging device specified by the designation of the imaging device in a time period of interest determined based on the designation of the time period. Then, the user device 400 displays the received image.

### <Operation>

Next, an operation of the assistance device 100 according to the present example embodiment will be described in detail with reference to the drawings.

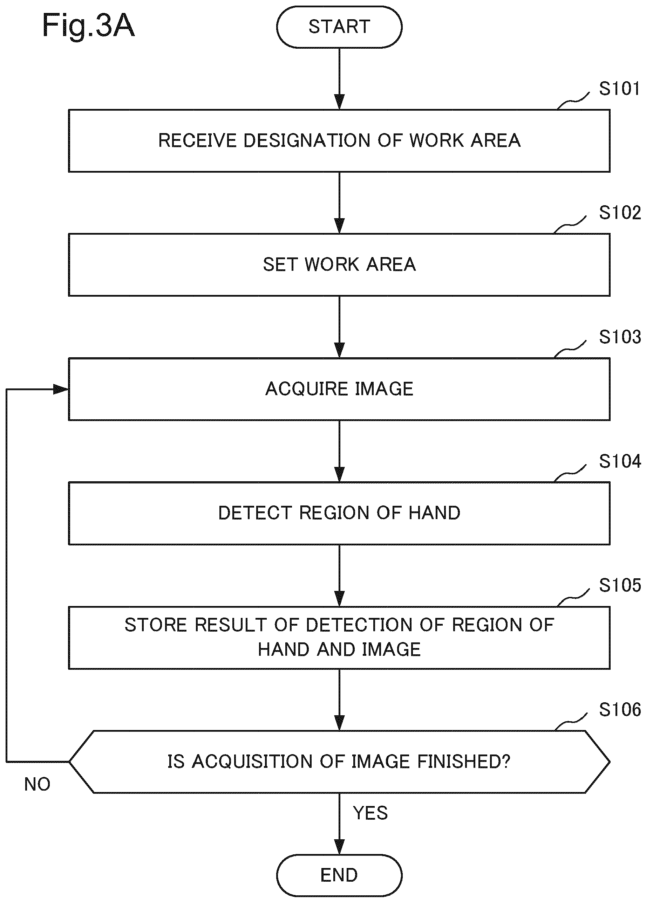

Fig. 3A is a first flowchart illustrating an example of the operation of the assistance device 100 according to the present example embodiment.

In the example illustrated in Fig. 3A, first, the reception unit 160 receives designation of a work area from the user device 400 (step S101). In step S101, for example, the output unit 140 may output an image captured by each of the imaging devices to the user device 400. The user device 400 may receive an image and display the received image. For example, the user device 400 transmits information indicating a work area designated by the user in the displayed image to the reception unit 160. A different work area may be designated for each imaging device. The reception unit 160 receives information indicating the work area, and sends the received information indicating the work area to the detection unit 120.

Next, the detection unit 120 sets the work area (step S102). Specifically, the detection unit 120 receives information indicating a work area for each imaging device, and sets the area indicated by the received information as a work area that is an area where a hand is detected.

The acquisition unit 110 acquires an image from each of the imaging devices (step S103). The acquisition unit 110 acquires an image and an imaging time at which the image was captured from each of the imaging devices. The acquisition unit 110 associates the acquired image with an identifier of an imaging device that captured the image and the imaging time at which the image was captured. The acquisition unit 110 uploads the image with which the identifier of the imaging device and the imaging time are associated into the image storage unit 150. The acquisition unit 110 sends the image with which the identifier of the imaging device and the imaging time are associated to the detection unit 120.

The detection unit 120 detects a hand region in the work area of the received image (step S104). As described above, the work area is set for each imaging device. The detection unit 120 detects a hand region from a work area set for an image of an imaging device that captured the received image. The detection unit 120 detects a hand region, for example, by a discriminator that discriminates whether the hand region is included in the image, which is obtained by learning.

The detection unit 120 uploads a hand region detection result together with the image into the image storage unit 150 (step S105).

When the image acquisition is not terminated (NO in step S106), the operation of the assistance device 100 returns to step S103. When the image acquisition is terminated (YES in step S106), the assistance device 100 ends the operation illustrated in Fig. 3A. For example, when an administrator of the assistance device 100 instructs termination of image acquisition, the assistance device 100 terminates the image acquisition.

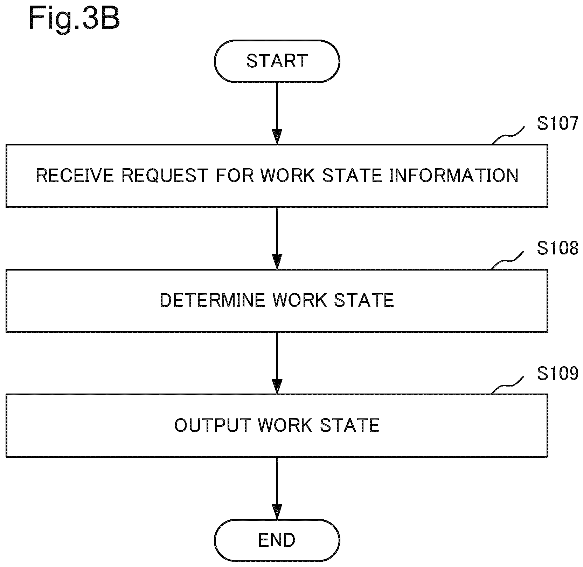

Fig. 3B is a first flowchart illustrating an example of the operation of the assistance device 100 according to the present example embodiment. The assistance device 100 performs the operation illustrated in Fig. 3B in parallel with the operation illustrated in Fig. 3A.

In the operation illustrated in Fig. 3B, first, the reception unit 160 receives a request for work state information from the user device 400 (step S107). Upon receiving the request for work state information from the user device 400, the reception unit 160 notifies the determination unit 130 that the request for work state information has been received from the user device 400.

In response to the notification from the reception unit 160 that the request for work state information has been received from the user device 400, the determination unit 130 determines a work state (step S108). Specifically, based on the hand detection result of the detection unit 120, the determination unit 130 generates a change in ratio of a time during which work is being performed, and determines a time period in which no work is being performed, for example, for each of the plurality of work areas illustrated in Fig. 2.

Next, the output unit 140 outputs the work state (step S109). Specifically, the output unit 140 sends, to the user device 400, a diagram including, for example, a graph of a change in ratio of a time during which work is being performed and a display of a time period in which no work is being performed as illustrated in Fig. 2.

The user device 400 receives the work state, and displays the received work state.

After the operation illustrated in Fig. 3B, the assistance device 100 may perform an operation to be described below.

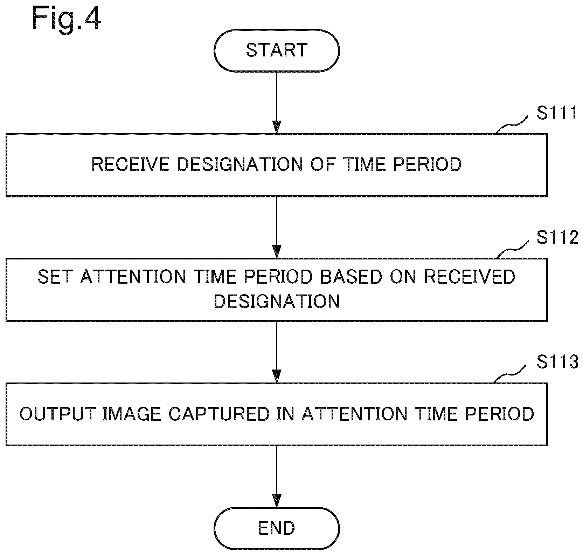

Fig. 4 is a flowchart illustrating an example of an operation of displaying an image in a designated time period of the assistance device 100 according to the present example embodiment.

First, the reception unit 160 receives designation of a time period from the user device 400 (step S 111). The reception unit 160 sets a time period of interest based on the received designation (step S112). The output unit 140 outputs an image captured in the time period of interest (step S113).

Note that, in step S111, the reception unit 160 may further receive designation of an imaging device from the user device 400. In that case, in step S113, the output unit 140 outputs an image captured in the time period of interest by an imaging device specified by the received designation.

### <Effect>

The present example embodiment has an effect in that accuracy can be improved in determining a stop of work in a work process. This is because the determination unit 130 determines a work state in a work area of an image based on a hand region detection result of the detection unit 120, and the output unit 140 outputs the work state. Since the work state is determined based on the detection of the hand region in the work area, accuracy is improved in determining a time during which work is actually stopped.

### <Modifications of First Example Embodiment>

One or a combination of modifications to be described below can be applied to the first example embodiment of the present disclosure.

### <First Modification>

The detection unit 120 extracts a hand region from a work area of an image. The detection unit 120 sends, to the determination unit 130, a combination of information indicating a range of the extracted hand region, a time at which the image was captured, and information specifying an imaging device that captured the image, as information indicating a hand detection result.

The determination unit 130 detects a time period in which a detected hand is not performing work in addition to a time period in which no hand is detected as a non-work time period. For example, the determination unit 130 determines whether the detected hand is performing work in the area where the hand is detected, using a discriminator that discriminates whether the hand is performing the work, which is learned in advance by machine learning. For example, the determination unit 130 may detect a time period in which a hand is stationary in a region where the hand is detected in addition to a time period in which no hand is detected as a non-work time period.

### <Second Modification>

Based on a non-work time period extracted from an image captured by each of the imaging devices and information on a process performed in an imaging range of an image captured by each of the plurality of imaging devices, the determination unit 130 specifies a non-work time period in each of the processes. As described above, each component of the assistance device 100 including the determination unit 130 can refer to an order in which the plurality of processes are performed and the information of the process performed in the imaging range of the image captured by each of the plurality of imaging devices.

The determination unit 130 according to the present modification specifies a process in which work is stagnant from among the plurality of processes, based on the order in which the plurality of processes are performed and the non-work time period in each of the processes, and sets information indicating the specified process as a work state. The process in which work is stagnant is, for example, a process causing an occurrence of a non-work time period in another process. For example, the determination unit 130 may specify, as a process in which work is stagnant, a process in which at least one of a length of a non-work time period and the number of non-work time periods is larger than that in the immediately following process by a predetermined standard or more.

The output unit 140 may output information indicating a process in which work is stagnant as a part of information indicating a work state. The output unit 140 may indicate a process in which work is stagnant, for example, in a color different from that of another process. The output unit 140 may indicate a process in which work is stagnant, for example, using a mark (e.g., a rectangle, an arrow, or the like) indicating the process in which work is stagnant. The output unit 140 may indicate a process in which work is stagnant, for example, by changing a font of a character string, a thickness of a character, a color of a character, or the like indicating the process in which work is stagnant.

### <Third Modification>

In a case where a non-work time period in a certain process is not caused by a work delay or the like in the immediately preceding process, it is expected that there is also a corresponding non-work time period in the immediately preceding process. In a case where a non-work time period in a certain process is caused by a work delay or the like in the immediately preceding process, it is expected that there is no corresponding non-work time period in the immediately preceding process.

For each combination of two consecutive processes, the determination unit 130 according to the present example embodiment compares lengths and times of non-work time periods of the two consecutive processes. Then, the determination unit 130 determines whether there is a non-work time period in the earlier one of the two processes corresponding to the non-work time period of the later one of the two processes.

For all combinations of two consecutive processes, a statistical value of a difference between an occurrence time of a non-work time period in the earlier process and an occurrence time of a non-work time period in the later process when the non-work time period in the later process is caused by the non-work time period in the earlier process may be derived in advance.

The determination unit 130 may hold in advance a statistical value of a difference between an occurrence time of a non-work time period in the earlier process and an occurrence time of a non-work time period in the later process caused by the non-work time period in the earlier process. The statistical value may be, for example, an average value, a median value, an intermediate value, or the like. The statistical value may further include variance and the like.

The determination unit 130 may determine whether there is a non-work time period in the earlier process in a time period (hereinafter also referred to as a time period of influence) in a range based on the statistical value described above before the non-work time period in the later process. The range based on the statistical value (that is, the time period of influence) is, for example, a time period having a predetermined width including a time earlier by a time period indicated by the statistical value described above than the non-work time period in the later process. The range based on the statistical value may be, for example, a time period having a width determined based on the above-described variance, including a time earlier by a time period indicated by the statistical value described above than the non-work time period in the later process.

When there is a non-work time period in the earlier process in the time period (that is, the time period of influence) in the range based on the statistical value described above before the non-work time period in the later process, the determination unit 130 may determine that there is no work delay (or no work stagnation) in the earlier process. When there is no non-work time period in the earlier process in the time period of influence, the determination unit 130 may determine that there is a work delay (or work stagnation) in a work in the earlier process immediately before the non-work time period of the later process. The determination unit 130 may determine where there is a work delay using another method.

The determination unit 130 may determine a time period between a start time of the non-work time period in the later process and a start time of the time period of influence described above as a time period in the previous work causing an occurrence of a non-work time period in the later process. The determination unit 130 may determine work in the earlier process in a time period between a start time of the non-work time period in the later process and a start time of the time period of influence described above as work causing an occurrence of a non-work time period in the later process.

The output unit 140 may output, as a part of information indicating a work state, information indicating work (factor work) in the earlier process in the time period determined to be a factor of an occurrence of a non-work time period in the later process. The output unit 140 may indicate the process and the time period of the factor work, for example, using a color different from that of another process. The output unit 140 may indicate a process in which work is stagnant, for example, using a mark (e.g., a rectangle, an arrow, or the like) indicating the process and the time period of the factor work.

### <Fourth Modification>

The detection unit 120 extracts a hand region from a work area.

The determination unit 130 may determine whether work is being actually performed based on a change in shape of a hand in the extracted hand region. For example, the determination unit 130 determines whether work is being performed using a determinator that determines whether work is being performed based on at least one of a shape of the hand and a motion of the hand. The determinator may be obtained in advance, for example, by machine learning. Even in a case where a hand region is detected from an image, if the determinator determines based on the image that no work is being performed, the determination unit 130 regards the image as an image from which no hand region is detected at the time of determining a work state as described above.

### <Fifth Modification >

A plurality of work areas may be included in an imaging range of one imaging device. Furthermore, work areas for the same process may be included in imaging ranges of a plurality of imaging devices. In this case, when a hand region is detected in one of the work areas for the same process imaged by the plurality of imaging devices, the detection unit 120 may determine that the hand region is included in that work area for the process.

### <Sixth Modification>

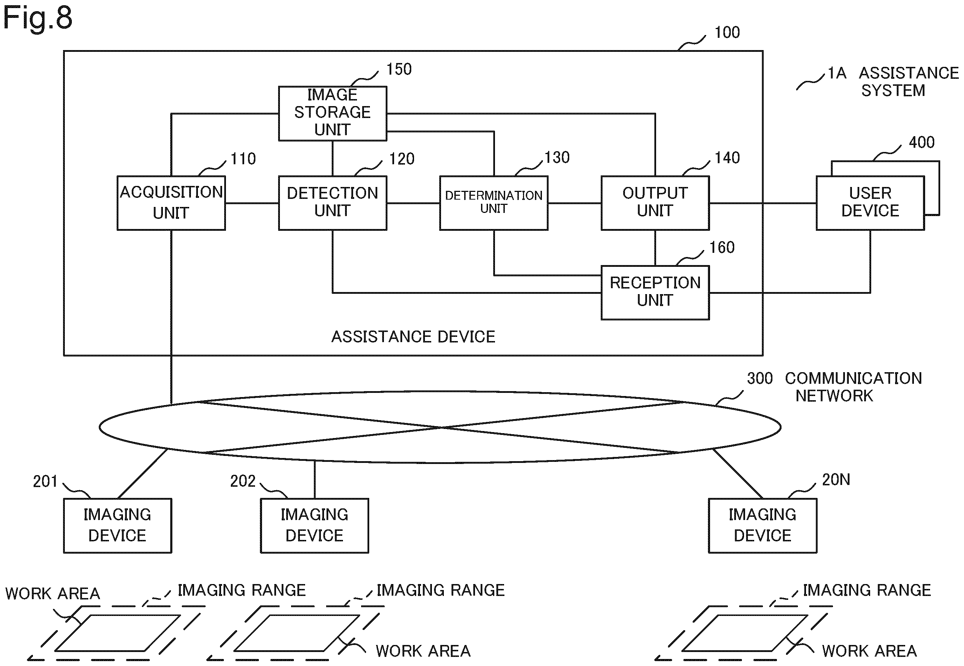

Fig. 8 is a block diagram illustrating a configuration of an assistance system 1A according to a sixth modification.

In the present modification, the assistance system 1A includes a plurality of user devices 400 each communicably connected to the assistance device 100. Then, a length of a non-detection time period to be detected as a non-work time period may be set for each user device 400 by the user of the user device 400, for example, using an input unit (e.g., a keyboard, a mouse, a touch panel, or the like) of the user device 400. Also, a length of a time period for calculating a non-detection ratio may be set for each user device 400 by the user of the user device 400, for example, using an input unit (e.g., a keyboard, a mouse, a touch panel, or the like) of the user device 400. Note that, although two user devices 400 are illustrated in the example of Fig. 8, the assistance system 1A may include three or more user devices 400.

For each user device 400, the determination unit 130 detects a non-detection time period having a length equal to or longer than the length set by the user as a non-work time period. For each user device 400, the determination unit 130 calculates a non-detection ratio for each time period having a length set by the user. In other words, the determination unit 130 determines information indicating a work state for each imaging device, based on a different standard set by the user for each user device 400.

Hereinafter, the present modification will be described in more detail.

Each of the user devices 400 may transmit a length of a non-detection time period to be detected as a non-work time period set by the user to the reception unit 160 of the assistance device 100. Each of the user devices 400 may transmit a length of a time period for calculating a non-detection ratio set by the user to the reception unit 160 of the assistance device 100. Furthermore, each of the user devices 400 transmits a request for information indicating a work state to the assistance device 100. The user device 400 may transmit at least one of a length of a non-detection time period to be detected as a non-work time period and a length of a time period for calculating a non-detection ratio, together with the request for information indicating the work state, to the assistance device 100.

The reception unit 160 receives a length of a non-detection time period to be detected as a non-work time period from the user device 400. The reception unit 160 associates the received length of the non-detection time period to be detected as the non-work time period with an identifier of the user device 400 that has transmitted the length of the non-detection time period. The reception unit 160 sends, to the determination unit 130, the length of the non-detection time period associated with the identifier of the user device 400 to be detected as a non-work time period. The determination unit 130 receives, from the reception unit 160, the length of the non-detection time period associated with the identifier of the user device 400 to be detected as a non-work time period.

The reception unit 160 receives a length of a time period for calculating a non-detection ratio from the user device 400. The reception unit 160 associates the received length of the time period for calculating a non-detection ratio with an identifier of the user device 400 that has transmitted the length of the time period. The reception unit 160 sends the length of the time period for calculating a non-detection ratio associated with the identifier of the user device 400 to the determination unit 130. The determination unit 130 receives, from the reception unit 160, the length of the time period for calculating a non-detection ratio associated with the identifier of the user device 400.

The reception unit 160 receives a request for information indicating a work state from the user device 400. The reception unit 160 associates the received request for information indicating a work state with an identifier of the user device 400 that has transmitted the request. The reception unit 160 sends the request for information indicating a work state associated with the identifier of the user device 400 to the determination unit 130. The determination unit 130 receives the request for information indicating a work state associated with the identifier of the user device 400 from the reception unit 160.

Upon receiving the request for information indicating a work state transmitted from the user device 400, the determination unit 130 reads information indicating a hand detection result for each imaging device from the image storage unit 150. From the information indicating the hand detection result for each imaging device, the determination unit 130 detects a non-detection time period having a length equal to or longer than the length set by the user of the user device 400 as a non-work time period. For each of the imaging devices, the determination unit 130 calculates a non-detection ratio for each time period having a length set by the user of the user device 400 (hereinafter referred to as a calculation time length). For each of the imaging devices, the determination unit 130 sets information on the calculated non-detection ratio for each time period having the calculation time length as information indicating a work state. The determination unit 130 associates the information indicating the work state with an identifier of the user device 400 that has transmitted the request for the information indicating the work state. The determination unit 130 sends, to the output unit 140, the information indicating the work state associated with the identifier of the user device 400 that has transmitted the request for information indicating the work state.

In a case where a length of a non-detection time period to be detected as a non-work time period is not transmitted from the user device 400 that has transmitted the request for information indicating the work state, the determination unit 130 may set a length of a non-detection time period to be detected as a non-work time period to a predetermined length. In a case where a length of a time period for calculating a non-detection ratio is not transmitted from the user device 400 that has transmitted the request for information indicating the work state, the determination unit 130 may calculate a non-detection ratio for each time period having a predetermined length.

The output unit 140 receives, from the determination unit 130, the information indicating the work state associated with an identifier of the user device 400 that has transmitted the request for information indicating the work state. The output unit 140 transmits the information indicating the work state received from the determination unit 130 to the user device 400 specified by the identifier associated with the information indicating the work state.

The assistance system 1A according to the present modification is similar to the assistance system 1 according to the first example embodiment, except for the above-described differences.

### <Seventh Modification>

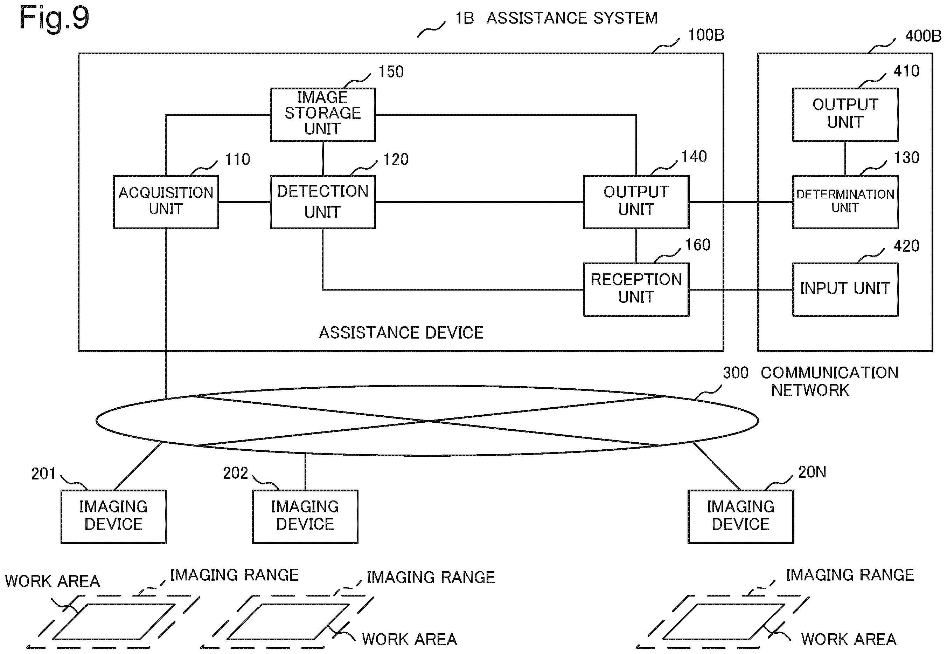

Fig. 9 is a block diagram illustrating an example of a configuration of an assistance system 1B according to a seventh modification. In the example illustrated in Fig. 9, the assistance system 1B includes an assistance device 100B and a user device 400B. Although one user device 400B is illustrated in the example of Fig. 9 to prevent the drawing from being complicated, the assistance system 1B may include a plurality of user devices 400. The assistance system 1B is similar to the assistance system 1 according to the first example embodiment, except for differences to be described below.

In the present modification, the user device 400B includes a determination unit 130, an output unit 410, and an input unit 420. In addition, the determination unit 130 is not included in the assistance device 100B.

In the present modification, the output unit 140 reads information indicating a hand detection result from the image storage unit 150 and outputs the read information to the user device 400B. The output unit 140 does not output information indicating a work state for each imaging device to the user device 400B. The output unit 410 does not output information indicating a work state for each imaging device to the user device 400B. In the other respects, the output unit 140 according to the present modification is the same as the output unit 140 according to the first example embodiment.

In the present modification, the output unit 410 receives information indicating a work state for each imaging device from the determination unit 130. The output unit 410 displays the information indicating the work state for each imaging device on a display device such as a display of the user device 400B.

In the present modification, a length of a non-detection time period to be detected as a non-work time period may be set by the user of the user device 400B, for example, using the input unit 420 (e.g., a keyboard, a mouse, a touch panel, or the like) of the user device 400B. Also, a length of a time period for calculating a non-detection ratio may be set by the user of the user device 400B, for example, using the input unit (e.g., a keyboard, a mouse, a touch panel, or the like) of the user device 400B.

The determination unit 130 according to the present modification may detect a non-detection time period having a length equal to or longer than the length set by the user of the user device 400B, in which the determination unit 130 is included, as a non-work time period. The determination unit 130 according to the present modification may calculate a non-detection ratio for each time period having the length set by the user of the user device 400B, in which the determination unit 130 is included, for each of the imaging devices.

In a case where a length of a non-detection time period to be detected as a non-work time period is not set by the user of the user device 400B, the determination unit 130 may set a length of a non-detection time period to be detected as a non-work time period to a predetermined length. In a case where a length of a time period for calculating a non-detection ratio is not set by the user of the user device 400B, the determination unit 130 may calculate a non-detection ratio for each time period having a predetermined length.

### <Eighth Modification>

In the present modification, a length of a non-detection time period to be detected as a non-work time period may be set for each user device 400 by the user of the user device 400, for example, using an input unit (e.g., a keyboard, a mouse, a touch panel, or the like) of the user device 400. Also, a length of a time period for calculating a non-detection ratio may be set for each user device 400 by the user of the user device 400, for example, using an input unit (e.g., a keyboard, a mouse, a touch panel, or the like) of the user device 400.

The determination unit 130 detects a non-detection time period having a length equal to or longer than the length set by the user of the user device 400 as a non-work time period. The determination unit 130 calculates a non-detection ratio for each time period having a length set by the user of the user device 400. In other words, the determination unit 130 determines information indicating a work state for each imaging device, based on a different standard set by the user of the user device 400.

Hereinafter, the present modification will be described in more detail.

The user devices 400 may transmit a length of a non-detection time period to be detected as a non-work time period set by the user to the reception unit 160 of the assistance device 100. The user devices 400 may transmit a length of a time period for calculating a non-detection ratio set by the user to the reception unit 160 of the assistance device 100. Furthermore, the user device 400 transmits a request for information indicating a work state to the assistance device 100. The user device 400 may transmit at least one of a length of a non-detection time period to be detected as a non-work time period and a length of a time period for calculating a non-detection ratio, together with the request for information indicating the work state, to the assistance device 100.

The reception unit 160 receives a length of a non-detection time period to be detected as a non-work time period from the user device 400. The reception unit 160 sends the received length of the non-detection time period to be detected as a non-work time period to the determination unit 130. The determination unit 130 receives the length of the non-detection time period to be detected as a non-work time period from the reception unit 160.

The reception unit 160 receives a length of a time period for calculating a non-detection ratio from the user device 400. The reception unit 160 sends the received length of the time period for calculating a non-detection ratio to the determination unit 130. The determination unit 130 receives the length of the time period for calculating a non-detection ratio from the reception unit 160.

The reception unit 160 receives a request for information indicating a work state from the user device 400. The reception unit 160 sends the received request for information indicating a work state to the determination unit 130.

The determination unit 130 receives the request for information indicating a work state from the reception unit 160.

Upon receiving the request for information indicating a work state transmitted from the user device 400, the determination unit 130 reads information indicating a hand detection result for each imaging device from the image storage unit 150. From the information indicating the hand detection result for each imaging device, the determination unit 130 detects a non-detection time period having a length equal to or longer than the length set by the user of the user device 400 as a non-work time period. For each of the imaging devices, the determination unit 130 calculates a non-detection ratio for each time period having a length set by the user of the user device 400 (hereinafter referred to as a calculation time length). For each of the imaging devices, the determination unit 130 sets information on the calculated non-detection ratio for each time period having the calculation time length as information indicating a work state. The determination unit 130 sends the information indicating the work state to the output unit 140.

In a case where a length of a non-detection time period to be detected as a non-work time period is not transmitted from the user device 400 that has transmitted the request for information indicating the work state, the determination unit 130 may set a length of a non-detection time period to be detected as a non-work time period to a predetermined length. In a case where a length of a time period for calculating a non-detection ratio is not transmitted from the user device 400 that has transmitted the request for information indicating the work state, the determination unit 130 may calculate a non-detection ratio for each time period having a predetermined length.

The assistance system 1 according to the present modification is similar to the assistance system 1 according to the first example embodiment, except for the above-described differences.

### <Second Example Embodiment>

Next, a second example embodiment of the present disclosure will be described in detail with reference to the drawings.

### <Configuration>

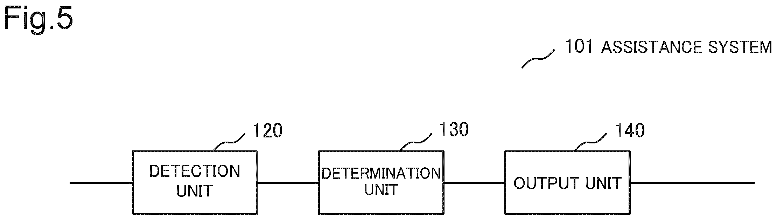

Fig. 5 is a block diagram illustrating an example of a configuration of an assistance system 101 according to a second example embodiment of the present disclosure. In the example illustrated in Fig. 5, the assistance system 101 includes a detection unit 120, a determination unit 130, and an output unit 140. The detection unit 120 detects a hand from an image obtained by imaging a work area. The determination unit 130 determines a work state based on a hand detection result. The output unit 140 outputs information indicating the work state. The detection unit 120 according to the present example embodiment may operate similarly to the detection unit 120 according to the first example embodiment. The determination unit 130 according to the present example embodiment may operate similarly to the determination unit 130 according to the first example embodiment. The output unit 140 according to the present example embodiment may operate similarly to the output unit 140 according to the first example embodiment.

### <Operation>

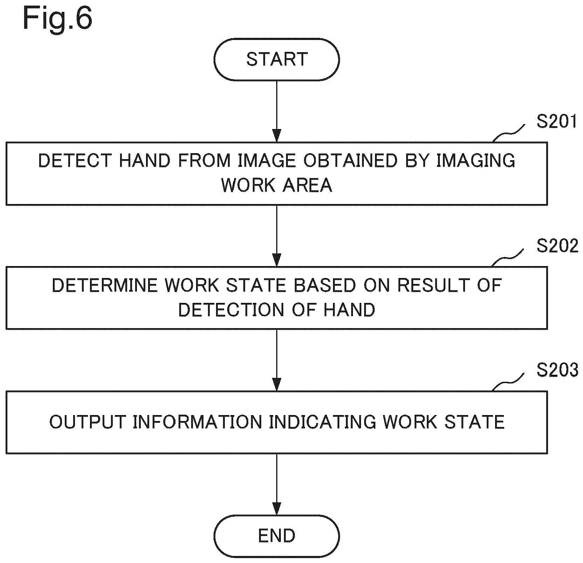

Fig. 6 is a flowchart illustrating an example of an operation of the assistance system 101 according to the second example embodiment of the present disclosure. In the example illustrated in Fig. 6, first, the detection unit 120 detects a hand from an image obtained by imaging a work area (step S201). Next, the determination unit 130 determines a work state based on a hand detection result (step S202). Then, the output unit 140 outputs information indicating the work state (step S203).

### <Effect>

The present example embodiment described above has the same effect as the first example embodiment. The ground therefor is the same as that for the effect in the first example embodiment.

### <Other Embodiments>

The assistance device 100 and the assistance system 101 described above can be implemented by a computer including a memory into which a program read from a storage medium is loaded and a processor that executes the program. The assistance device 100 and the assistance system 101 can also be implemented by dedicated hardware. The assistance device 100 and the assistance system 101 can also be implemented by a combination of the above-described computer and the above-described dedicated hardware.

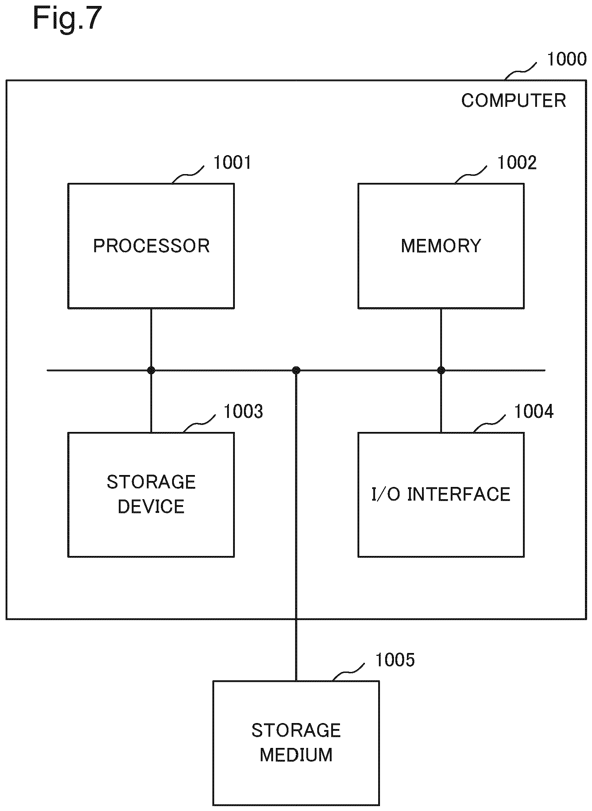

Fig. 7 is a diagram illustrating an example of a hardware configuration of a computer 1000 capable of implementing the assistance device 100 and the assistance system 101 according to an example embodiment of the present disclosure. Referring to Fig. 7, the computer 1000 includes a processor 1001, a memory 1002, a storage device 1003, and an input/output (I/O) interface 1004.

In addition, the computer 1000 can access a storage medium 1005. The memory 1002 and the storage device 1003 are, for example, storage devices such as a random access memory (RAM) and a hard disk. The storage medium 1005 is, for example, a storage device such as a RAM or a hard disk, a read only memory (ROM), or a portable storage medium. The storage device 1003 may be the storage medium 1005. The processor 1001 can read and write data and programs from and into the memory 1002 and the storage device 1003. The processor 1001 can access, for example, the imaging device and the user device 400 via the I/O interface 1004. The processor 1001 may access the storage medium 1005. The storage medium 1005 stores a program for operating the computer 1000 as the assistance device 100.

The processor 1001 loads a program stored in the storage medium 1005 to operate the computer 1000 as the assistance device 100 into the memory 1002. Then, the processor 1001 executes the program loaded into the memory 1002, thereby operating the computer 1000 as the assistance device 100.

Alternatively, the storage medium 1005 stores a program for operating the computer 1000 as the assistance system 101.

The processor 1001 loads a program stored in the storage medium 1005 to operate the computer 1000 as the assistance system 101 into the memory 1002. Then, the processor 1001 executes the program loaded into the memory 1002, thereby operating the computer 1000 as the assistance system 101.

The acquisition unit 110, the detection unit 120, the determination unit 130, the output unit 140, and the reception unit 160 can be implemented, for example, by the processor 1001 that executes the program loaded into the memory 1002. The image storage unit 150 can be implemented by the memory 1002 or the storage device 1003 such as a hard disk device included in the computer 1000. Some or all of the acquisition unit 110, the detection unit 120, the determination unit 130, the output unit 140, the image storage unit 150, and the reception unit 160 can be implemented by a dedicated circuit that implements the functions of the respective units.

In addition, some or all of the above-described example embodiments may be described as in the following supplementary notes, but are not limited to the following supplementary notes.

### (Supplementary Note 1)

An assistance system including:
detection means for detecting a hand from an image obtained by imaging a work area;
determination means for determining a work state based on a hand detection result; and
output means for outputting information indicating the work state.

### (Supplementary Note 2)

The assistance system according to supplementary note 1, wherein
the detection means detects hands from images obtained by imaging a plurality of work areas in which work is performed for a plurality of processes, respectively, and
the determination means determines, as the work state, a non-work time period in which no hand is continuously detected in each of the plurality of work areas.

### (Supplementary Note 3)

The assistance system according to supplementary note 2, wherein
the determination means determines a process in which the work is stagnant, from among the plurality of processes, as the work state, based on the non-work time period determined for each of the plurality of work areas.

### (Supplementary Note 4)

The assistance system according to supplementary note 2 or 3, wherein
the determination means estimates a time period causing an occurrence of a non-work time period of the process in which the work is stagnant, based on a relationship between the plurality of processes and the non-work time period determined for each of the plurality of work areas.

### (Supplementary Note 5)

The assistance system according to any one of supplementary notes 1 to 4, wherein
the output means outputs a display of a change in the work state over time as the information indicating the work state,
the assistance system further includes:
   image storage means for storing the image; and
   reception means for receiving designation of a time period, and
   the output means outputs the image captured in a time period of interest based on the designation.

### (Supplementary Note 6)

An assistance method including:
detecting a hand from an image obtained by imaging a work area;
determining a work state based on a hand detection result; and
outputting information indicating the work state.

### (Supplementary Note 7)

The assistance method according to supplementary note 6, including:
detecting hands from images obtained by imaging a plurality of work areas in which work is performed for a plurality of processes, respectively, and
determining, as the work state, a non-work time period in which no hand is continuously detected in each of the plurality of work areas.

### (Supplementary Note 8)

The assistance method according to supplementary note 7, including
determining, as the work state, a process in which the work is stagnant from among the plurality of processes, based on the non-work time period determined for each of the plurality of work areas.

### (Supplementary Note 9)

The assistance method according to supplementary note 7 or 8, including
estimating a time period causing an occurrence of a non-work time period of the process in which the work is stagnant based on a relationship between the plurality of processes and the non-work time period determined for each of the plurality of work areas.

### (Supplementary Note 10)

The assistance method according to any one of supplementary notes 6 to 9, includes:
outputting a display of a change in the work state over time as the information indicating the work state;
receiving designation of a time period; and
outputting the image captured in a time period of interest based on the designation.

### (Supplementary Note 11)

A program for causing a computer to execute:
detection processing of detecting a hand from an image obtained by imaging a work area;
determination processing of determining a work state based on a hand detection result; and
output processing of outputting information indicating the work state.

### (Supplementary Note 12)

The program according to supplementary note 11, wherein
the detection processing detecting hands from images obtained by imaging a plurality of work areas in which work is performed for a plurality of processes, respectively, and
the determination processing detects, as the work state, a non-work time period in which no hand is continuously detected in each of the plurality of work areas.

### (Supplementary Note 13)

The program according to supplementary note 12, wherein
the determination processing determines, as the work state, a process in which the work is stagnant from among the plurality of processes, based on the non-work time period determined for each of the plurality of work areas.

### (Supplementary Note 14)

The program according to supplementary note 12 or 13, wherein
the determination processing estimates a time period causing an occurrence of a non-work time period of the process in which the work is stagnant based on a relationship between the plurality of processes and the non-work time period determined for each of the plurality of work areas.

### (Supplementary Note 15)

The program according to any one of supplementary notes 11 to 14, wherein
the output processing outputs a display of a change in the work state over time as the information indicating the work state,
the program causes the computer to further execute:
   image storage processing of storing the image; and
   reception processing of receiving designation of a time period, and
   the output processing outputs the image captured in a time period of interest based on the designation.

While the present disclosure has been particularly shown and described with reference to example embodiments thereof, the present disclosure is not limited to these example embodiments. It will be understood by those skilled in the art that various changes in form and details may be made therein without departing from the spirit and scope of the present disclosure as defined by the claims.

This application is based upon and claims the benefit of priority from Japanese patent application No. 2020-181380, filed on October 29, 2020, the disclosure of which is incorporated herein in its entirety by reference.

### Reference signs List

- 1: assistance system
- 1A: assistance system
- 1B: assistance system
- 100: assistance device
- 100A: assistance device
- 100B: assistance device
- 101: assistance system
- 110: acquisition unit
- 120: detection unit
- 130: determination unit
- 140: output unit
- 150: image storage unit
- 160: reception unit
- 201: imaging device
- 202: imaging device
- 20N: imaging device
- 300: communication network
- 400: user device
- 400B: user device
- 410: output unit
- 420: input unit
- 1001: processor
- 1002: memory
- 1003: storage device
- 1004: I/O interface
- 1005: storage medium

## Claims

1. An assistance system comprising:
detection means for detecting a hand from an image obtained by imaging a work area;
determination means for determining a work state based on a hand detection result; and
output means for outputting information indicating the work state.

2. The assistance system according to claim 1, wherein
the detection means detects hands from images obtained by imaging a plurality of work areas in which work is performed for a plurality of processes, respectively, and
the determination means determines, as the work state, a non-work time period in which no hand is continuously detected in each of the plurality of work areas.

3. The assistance system according to claim 2, wherein
the determination means determines a process in which the work is stagnant, from among the plurality of processes, as the work state, based on the non-work time period determined for each of the plurality of work areas.

4. The assistance system according to claim 2 or 3, wherein
the determination means estimates a time period causing an occurrence of a non-work time period of the process in which the work is stagnant, based on a relationship between the plurality of processes and the non-work time period determined for each of the plurality of work areas.

5. The assistance system according to any one of claims 1 to 4, wherein
the output means outputs a display of a change in the work state over time as the information indicating the work state,
the assistance system further comprises:
image storage means for storing the image; and
reception means for receiving designation of a time period, and
the output means outputs the image captured in a time period of interest based on the designation.

6. An assistance method comprising:
detecting a hand from an image obtained by imaging a work area;
determining a work state based on a hand detection result; and
outputting information indicating the work state.

7. The assistance method according to claim 6, comprising:
detecting hands from images obtained by imaging a plurality of work areas in which work is performed for a plurality of processes, respectively; and
determining, as the work state, a non-work time period in which no hand is continuously detected in each of the plurality of work areas.

8. The assistance method according to claim 7, comprising
determining, as the work state, a process in which the work is stagnant from among the plurality of processes, based on the non-work time period determined for each of the plurality of work areas.

9. The assistance method according to claim 7 or 8, comprising estimating a time period causing an occurrence of a non-work time period of the process in which the work is stagnant based on a relationship between the plurality of processes and the non-work time period determined for each of the plurality of work areas.

10. The assistance method according to any one of claims 6 to 9, comprising:
outputting a display of a change in the work state over time as the information indicating the work state;
receiving designation of a time period; and
outputting the image captured in a time period of interest based on the designation.

11. A storage medium storing a program for causing a computer to execute:
detection processing of detecting a hand from an image obtained by imaging a work area;
determination processing of determining a work state based on a hand detection result; and
output processing of outputting information indicating the work state.

12. The storage medium according to claim 11, wherein
the detection processing detects hands from images obtained by imaging a plurality of work areas in which work is performed for a plurality of processes, respectively, and
the determination processing detects, as the work state, a non-work time period in which no hand is continuously detected in each of the plurality of work areas.

13. The storage medium according to claim 12, wherein
the determination processing determines, as the work state, a process in which the work is stagnant from among the plurality of processes, based on the non-work time period determined for each of the plurality of work areas.

14. The storage medium according to claim 12 or 13, wherein
the determination processing estimates a time period causing an occurrence of a non-work time period of the process in which the work is stagnant based on a relationship between the plurality of processes and the non-work time period determined for each of the plurality of work areas.

15. The storage medium according to any one of claims 11 to 14, wherein
the output processing outputs a display of a change in the work state over time as the information indicating the work state,
the program causes the computer to further execute:
image storage processing of storing the image; and
reception processing of receiving designation of a time period, and
the output processing outputs the image captured in a time period of interest based on the designation.
